# EUROPÄISCHE PATENTSCHRIFT

(11) **EP 3 104 340 B1**
(45) Veröffentlichungstag und Bekanntmachung des Hinweises auf die Patenterteilung: **16.03.2022**
(21) Anmeldenummer: 16168267.9
(22) Anmeldetag: 04.05.2016
(51) Int. Cl.: G07C 9/00, G06Q 10/08, G06Q 50/30

(54) **VERFAHREN UND VORRICHTUNG ZUM BEWIRKEN DES ENTRIEGELNS UND VERRIEGELNS ZUMINDEST EINER TÜR EINES FAHRZEUGS FÜR EINE ZUSTELLUNG**
METHOD AND DEVICE FOR EFFECTING THE UNLOCKING AND LOCKING OF AT LEAST ONE DOOR OF A VEHICLE FOR A DELIVERY
PROCEDE ET DISPOSITIF DE DEVERROUILLAGE ET DE VERROUILLAGE D'AU MOINS UNE PORTE DE VEHICULE POUR UNE MISE A DISPOSITION

(30) Priorität: 20.05.2015 DE 102015107975
(43) Veröffentlichungstag der Anmeldung: 14.12.2016
(73) Patentinhaber: Deutsche Post AG, 53113 Bonn (DE)
(72) Erfinder: Wiechers, Dr. Ralph, 53508 Mayschoß (DE); Busecke, Matthias, 53225 Bonn (DE)
(74) Vertreter: Cohausz & Florack

(56) Entgegenhaltungen:
- DE-A1-102011 018 901
- DE-A1-102011 089 496
- DE-U1-202014 105 330
- US-A1- 2012 188 054

## Beschreibung

### Gebiet

Beispielhafte Ausführungsformen der Erfindung betreffen ein Verfahren zum Bewirken des Entriegelns und Verriegelns zumindest einer Tür eines Fahrzeugs für eine Zustellung einer Sendung, insbesondere eines Pakets und/oder eines Briefs, in das Fahrzeug sowie ein Fahrzeug und ein System.

### Hintergrund

Die Zustellung einer Sendung in ein Fahrzeug des Sendungsempfängers durch das Ablegen der Sendung in den Innenraum des Fahrzeugs ist eine für den Sendungsempfänger sehr komfortable Zustellungsform, da der Sendungsempfänger die Sendung nicht persönlich in Empfang nehmen muss. Beispielsweise kann die Sendung in das auf einem Unternehmensparkplatz abgestellte Fahrzeug des Sendungsempfängers während der Arbeitszeit des Sendungsempfängers zugestellt werden. Allerdings muss der Zusteller für die Zustellung der Sendung in das Fahrzeug Zugang zum Innenraum des Fahrzeugs erhalten, ohne dass der ordnungsgemäße Ablauf des Zustellungsvorgangs am Fahrzeug beispielsweise durch die persönliche Anwesenheit des Sendungsempfängers sichergestellt ist. Dementsprechend bestehen große Sicherheitsbedenken gegenüber dieser Zustellungsform, die bekannte Verfahren und Vorrichtungen bislang nicht ausräumen konnten.

In dem Dokument CN104021514A wird ein Empfangsverfahren, -system und -gerät für die Fahrzeuglogistik offenbart. Das Empfangsverfahren für die Fahrzeuglogistik umfasst die Schritte, dass ein erstes Steuersignal von einem entfernten Terminal empfangen wird und eine auf einen bestimmten Raum gerichtete Kamera gestartet wird; Videoinformationen des bestimmten Raums an das entfernte Terminal gesendet werden; ein zweites Steuersignal von dem entfernten Terminal empfangen wird und ein vorbestimmter Raum eines Automobils geöffnet wird; ein drittes Steuersignal von dem entfernten Terminal empfangen wird und der vorbestimmte Raum verriegelt wird. Gemäß dem Empfangsverfahren für die Fahrzeuglogistik werden aufgrund der Tatsache, dass das Auto als Empfangsort für den Empfang von Artikeln, die von Kurieren geliefert werden, verwendet wird, Unsicherheitsfaktoren vermieden, die entstehen, wenn die Kuriere direkt Häuser betreten, um die Artikel zu liefern, und das Phänomen, dass die Artikel nicht empfangen werden können, weil die Empfänger nicht an den Empfangsadressen sind, kann ebenfalls vermieden werden.

### Zusammenfassung einiger beispielhafter Ausführungsformen der Erfindung

Die vorliegende Erfindung hat sich daher unter anderem die Aufgabe gestellt, diese Probleme zu überwinden.

Diese Aufgabe wird erfindungsgemäß durch die Merkmale der unabhängigen Ansprüche gelöst. Vorteilhafte Ausgestaltungen der Erfindung sind in den abhängigen Ansprüchen angegeben.

Im Folgenden werden die Eigenschaften des erfindungsgemäßen Verfahrens, des erfindungsgemäßen Fahrzeugs und des erfindungsgemäßen Systems - teilweise beispielhaft - beschrieben.

Die Steuervorrichtung ist eine Steuervorrichtung für ein Fahrzeug. Die Steuervorrichtung ist beispielsweise eine werksseitig in das Fahrzeug verbaute Steuervorrichtung und steuert eine Vielzahl von Funktionen und/oder Mitteln des Fahrzeugs. Es ist jedoch auch denkbar, dass die Steuervorrichtung in das Fahrzeug nachrüstbar ist und beispielsweise nur Funktionen und Mittel (z.B. Verriegelungsmittel) des Fahrzeugs steuert, um die Zustellung der Sendung in das Fahrzeug zu ermöglichen.

Unter einer Steuervorrichtung soll eine Vorrichtung verstanden werden, die das Entriegeln und das Verriegeln zumindest einer Tür eines Fahrzeugs steuert. Zum Beispiel sind Steuermittel der Steuervorrichtung eingerichtet, ein Steuersignal abzusetzen, beispielsweise an Verriegelungsmittel der Tür, um ein Entriegeln der Tür zu veranlassen, um den Zugang zu einem Innenraum des Fahrzeugs zu ermöglichen. Zum Beispiel sind die Steuermittel der Steuervorrichtung ferner eingerichtet, ein Steuersignal abzusetzen, beispielsweise an Verriegelungsmittel der Tür, um ein Verriegeln der Tür zu veranlassen, um den Zugang zu einem Innenraum des Fahrzeugs zu verhindern. Dementsprechend soll unter dem Bewirken des Entriegelns und/oder des Verriegelns der Tür des Fahrzeugs beispielsweise das Ansteuern der Verriegelungsmittel der Tür durch die Steuervorrichtung verstanden werden, um ein Entriegeln und/oder ein Verriegeln der Tür durch die Verriegelungsmittel der Tür zu veranlassen.

Ein Beispiel für Verriegelungsmittel der Tür ist ein elektronisch ansteuerbares Schloss und/oder eine elektronisch ansteuerbare Verriegelungseinheit. Zum Beispiel sind die Steuermittel der Steuervorrichtung eingerichtet, ein solches Schloss zu steuern und somit ein Öffnen des Schlosses (d.h. ein Entriegeln der Tür) und/oder ein Schließen des Schlosses (d.h. ein Verriegeln der Tür) bewirken zu können. Es ist beispielsweise denkbar, dass die Steuervorrichtung die Verriegelungsmittel umfasst. Die Verriegelungsmittel der Tür können jedoch auch separat von der Steuervorrichtung sein.

Unter dem Bewirken des Entriegelns der Tür des Fahrzeugs zumindest teilweise in Abhängigkeit der erhaltenen Zugangsberechtigungsinformation durch die Steuervorrichtung soll verstanden werden, dass das Entriegeln der Tür des Fahrzeugs zumindest teilweise in Reaktion auf das Erhalten der Zugangsberechtigungsinformation bewirkt wird.

Das Erhalten einer oder mehrerer mit einem Zustellungsereignis assoziierten Zustellungsereignisinformationen an der Steuervorrichtung soll sowohl als Offenbarung des Falls, dass eine Zustellungsereignisinformation an der Steuervorrichtung erhalten wird, als auch als Offenbarung des Falls, dass mehrere Zustellungsereignisinformationen an der Steuervorrichtung erhalten werden, verstanden werden. Wenn im Folgenden (z.B. aus Lesbarkeitsgründen) nur auf die Mehrzahl Zustellungsereignisinformationen (d.h. mehrere Zustellungsereignisinformationen) Bezug genommen wird, soll dies stets als Offenbarung beider Fälle (d.h. eine Zustellungsereignisinformation oder mehrere Zustellungsereignisinformationen) verstanden werden.

Das Gleiche gilt auch für das Bewirken des Verriegelns der Tür des Fahrzeugs nur dann, wenn die erhaltenen Zustellungsereignisinformationen mit einem oder mehreren vorgegebenen Zustellungsereignissen assoziiert sind. Dies soll sowohl als Offenbarung der Falls, dass die erhaltenen Zustellungsereignisinformationen mit einem vorgegebenen Zustellungsereignis assoziiert sind, als auch als Offenbarung des Falls, dass die erhaltenen Zustellungsereignisinformationen mit mehreren vorgegebenen Zustellungsereignissen assoziiert sind, verstanden werden. Wenn im Folgenden (z.B. aus Lesbarkeitsgründen) nur auf die Mehrzahl Zustellungsereignisse (d.h. mehrere vorgegebene Zustellungsereignisse) Bezug genommen wird, soll dies stets als Offenbarung beider Fälle (d.h. ein vorgegebenes Zustellungsereignis oder mehrere vorgegebene Zustellungsereignisse) verstanden werden.

Informationen (z.B. die Zugangsberechtigungsinformation) können an der Steuervorrichtung beispielsweise durch Empfangen und/oder durch Erfassen erhalten werden.

Informationen (z.B. die Zugangsberechtigungsinformation) können durch Empfangen der Information an Kommunikationsmitteln der Steuervorrichtung erhalten werden. Die Steuervorrichtung umfasst entsprechende Kommunikationsmittel. Die Kommunikationsmittel der Steuervorrichtung sind beispielsweise eingerichtet, über eine Kommunikationsverbindung mit einer tragbaren Zustellervorrichtung und/oder mit einer zentralen Fernüberwachungsvorrichtung zum Beispiel mittelbar (z.B. über Kommunikationsmittel des Fahrzeugs) und/oder unmittelbar zu kommunizieren und Informationen zu senden und/oder empfangen. Ein Beispiel für solche Kommunikationsmittel ist eine Kommunikationsschnittstelle. Zum Beispiel umfassen die Kommunikationsmittel der Steuervorrichtung eine Kommunikationsschnittstelle einer drahtlosen und/oder drahtgebundenen Kommunikationstechnik.

Ein Beispiel für eine drahtlose Kommunikationstechnik ist eine lokale Funknetztechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC- sind beispielsweise gemäß den ISO-Standards 18000, 11784/11785 und dem ISO/IEC-Standard 14443-A und 15693 spezifiziert. Die Bluetooth-Spezifikationen sind derzeit im Internet unter www.bluetooth.org erhältlich. WLAN ist zum Beispiel in den Standards der IEEE-802.11-Familie spezifiziert. Ein weiteres Beispiel für eine drahtlose Kommunikationstechnik ist eine überörtliche Funknetztechnik wie beispielsweise eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich.

Bei der tragbaren Zustellervorrichtung handelt es sich beispielsweise um ein tragbares elektronisches Gerät und/oder eine tragbare elektronische Einheit. Die Zustellervorrichtung ist beispielsweise eingerichtet, mit den Kommunikationsmitteln der Steuervorrichtung mittelbar (z.B. über Kommunikationsmittel des Fahrzeugs) und/oder unmittelbar zu kommunizieren, beispielsweise eine Zugangsberechtigungsinformation und/oder eine oder mehrere Zustellungsereignisinformationen an die Kommunikationsmittel der Steuervorrichtung zu kommunizieren. Zum Beispiel kann die Zustellervorrichtung entsprechende Kommunikationsmittel umfassen, beispielsweise einen analogen Schaltkreis zum Senden und Empfangen (auch als Sendeempfänger oder Transceiver bezeichnet), eine Schaltung (z.B. einen digitalen Schaltkreis und/oder einen Prozessor) und einen Speicher (beispielsweise ein EEPROM - Electrically Erasable Programmable Read-Only Memory). Ein Beispiel für eine Zustellervorrichtung ist zum Beispiel ein Nutzergerät wie ein Mobiltelefon, ein Persönlicher Digitaler Assistent (PDA), ein Medienabspielgerät (z.B. ein iPod) und/oder ein Navigationsgerät. Ein weiteres Beispiel für eine Zustellervorrichtung ist zum Beispiel ein Zustellergerät eines Zustelldienstes wie ein Handscanner, beispielsweise der Dolphin 99EX Mobile Computer der Firma Honeywell. Ein weiteres Beispiel für eine Zustellervorrichtung ist zum Beispiel ein "Tag" wie ein RFID- oder NFC-Tag, beispielsweise ein MiFARE DESFire von NXP.

Bei der Fernüberwachungsvorrichtung handelt es sich beispielsweise um einen oder mehrere Server, beispielsweise Server eines Fahrzeugherstellers und/oder eines Zustelldienstes. Die Fernüberwachungsvorrichtung ist beispielsweise eingerichtet, mit den Kommunikationsmitteln der Steuervorrichtung mittelbar (z.B. über Kommunikationsmittel des Fahrzeugs) und/oder unmittelbar zu kommunizieren, beispielsweise eine Zugangsberechtigungsinformationen und/oder eine oder mehrere Zustellungsereignisinformationen an die Kommunikationsmittel der Steuervorrichtung zu kommunizieren. Zum Beispiel kann die Fernüberwachungsvorrichtung entsprechende Kommunikationsmittel umfassen. Eine Fernüberwachungsvorrichtung eines Zustelldienstes überwacht beispielsweise den ordnungsgemäßen Ablauf einer oder mehrerer Zustellung, disponiert eine oder mehrere Zustellungen und stellt die für die Zustellungen notwendigen Informationen (z.B. Zugangsberechtigungsinformationen) bereit. Eine Fernüberwachungsvorrichtung eines Fahrzeugherstellers überwacht beispielsweise die Funktion und Position eines oder mehrerer Fahrzeug und steuert Mittel eines oder mehrerer Fahrzeug (z.B. um die Fahrzeuge aus der Ferne zu warten, zu aktivieren, zu deaktivieren, zu entriegeln und/oder zu verriegeln).

Unter einem Zustellungsereignis soll beispielsweise ein Ereignis verstanden werden, das während des Zustellungsvorgangs ausgelöst wird und durch entsprechende Erfassungsmittel erfassbar ist. Eine Zustellungsereignisinformation soll beispielsweise als mit einem Zustellungsereignis assoziiert verstanden werden, wenn die Zustellungsereignisinformation anzeigt, dass das Zustellungsereignis erfasst wurde, zum Beispiel durch entsprechende Erfassungsmittel erfasst wurde.

Die vorgegebenen Zustellungsereignisse werden durch eine Handlung des Zustellers während des Zustellungsvorgangs am Fahrzeug ausgelöst. Das vorgegebene Zustellungsereignis oder die vorgegebenen Zustellungsereignisse sind derart gewählt, dass das Auslösen des vorgegebenen Zustellungsereignisses oder der vorgegebenen Zustellungsereignisse zumindest mit einer hohen Wahrscheinlichkeit auf den Abschluss oder den Abbruch des Zustellungsvorgangs am Fahrzeug schließen lässt. Dadurch, dass das Verriegeln der Tür des Fahrzeugs nur dann bewirkt wird, wenn die erhaltenen Zustellungsereignisinformationen mit einem oder mehreren vorgegebenen Zustellungsereignissen assoziiert sind, kann somit sichergestellt werden, dass die Tür automatisch verriegelt wird, wenn der Zustellungsvorgang am Fahrzeug zumindest mit einer hohen Wahrscheinlichkeit (z.B. mehr als 50%) abgebrochen und/oder abgeschlossen wurde. Solange der Zustellungsvorgang am Fahrzeug zumindest mit einer hohen Wahrscheinlichkeit (z.B. mehr als 50%) noch durchgeführt wird, bleibt die Tür dagegen entriegelt. Dies ist beispielsweise vorteilhaft, um zu verhindern, dass die Tür während des Zustellungsvorgangs am Fahrzeug verriegelt wird und der Zustellungsvorgang dadurch nicht beendet werden kann. Gleichzeitig kann dadurch vermieden werden, dass die Tür auch nach dem Abbruch oder dem Abschluss des Zustellungsvorgangs am Fahrzeug entriegelt bleibt.

Die vorliegende Erfindung ermöglicht somit, den Zustellungsvorgang am Fahrzeug zu überwachen und die Sicherheit zu erhöhen.

Weitere Vorteile der offenbarten Erfindung werden nachfolgend anhand teilweise beispielhafter Ausführungsformen des Verfahrens, des Fahrzeugs und des Systems beschrieben, deren Offenbarung für die jeweiligen Kategorien (Verfahren, Vorrichtung, System) gleichermaßen gelten soll.

Gemäß der Erfindungprüft die Steuervorrichtung, ob die eine oder die mehreren erhaltenen Zustellungsereignisinformationen mit dem einem oder den mehreren vorgegebenen Zustellungsereignissen assoziiert sind. Es wird geprüft, ob die die eine oder die mehreren erhaltenen Zustellungsereignisinformationen anzeigen, dass das eine oder die mehreren vorgegebenen Zustellungsereignisse durch Erfassungsmittel des Fahrzeugs erfasst wurden. Die Steuervorrichtung umfasst entsprechende Prüfmittel.

Das Verriegeln der Tür des Fahrzeugs durch die Steuervorrichtung wird nur dann bewirkt, wenn das Prüfen ergibt, dass die erhaltenen Zustellungsereignisinformationen mit einem oder mehreren vorgegebenen Zustellungsereignissen assoziiert sind (z.B. wenn das Prüfen ergibt, dass die erhaltenen Zustellungsereignisinformationen anzeigen, dass die mehreren vorgegebenen Zustellungsereignisse erfasst wurden).

Gemäß einer beispielhaften Ausführungsform der Erfindung ist zumindest ein weiteres der vorgegebenen Zustellungsereignissen das Öffnen und/oder Schließen der Tür, eine in der Umgebung der Steuervorrichtung befindliche tragbare Zustellervorrichtung, eine Benutzereingabe zum Abschluss des Zustellungsvorgangs durch den Zusteller an einer tragbaren Zustellervorrichtung und/oder das Überschreiten einer vorgegebenen Dauer des Zustellungsvorgangs seit dem Bewirken des Entriegelns der Tür des Fahrzeugs und/oder seit dem Erhalten einer Zustellungsereignisinformation.

Um die Sendung in das Fahrzeug zustellen zu können (d.h. die Sendung in den Innenraum des Fahrzeugs ablegen zu können), muss der Zusteller die Tür zwangsläufig öffnen und schließen. Das Öffnen und/oder Schließen der Tür ist somit ein durch den Zusteller während des Zustellungsvorgangs zwangsläufig ausgelöstes Ereignis. Das Erfassen dieser Zustellungsereignisses erlaubt somit eine Überwachung einiger wesentlicher Handlungen des Zustellers während des Zustellungsvorgangs am Fahrzeug. So lässt das Öffnen der Tür beispielsweise auf den Beginn des Zustellungsvorgangs am Fahrzeug schließen, und das Schließen der Tür lässt beispielsweise auf den Abschluss des Zustellungsvorgangs am Fahrzeug schließen. Das Öffnen und/oder Schließen der Tür kann beispielsweise durch einen Türöffnungssensor erfasst werden. Türöffnungssensoren sind in den meisten Fahrzeugen zur Kontrolle, ob die Türen des Fahrzeugs ordnungsgemäß geschlossen sind vorgesehen.

Auch das Ablegen der Sendung in den Innenraum des Fahrzeugs ist ein durch den Zusteller während des Zustellungsvorgangs am Fahrzeug zwangsläufig ausgelöstes Ereignis. Das Erfassen dieses Zustellungsereignisses erlaubt somit eine Überwachung einer wesentlichen Handlung des Zustellers während des Zustellungsvorgangs am Fahrzeug. Das Ablegen der Sendung in den Innenraum des Fahrzeugs kann beispielsweise durch einen Gewichtssensor, einen Beladungssensor, eine Kamera oder einen Ultraschallsensor erfasst werden. Zum Beispiel kann ein Gewichtssensor eine Veränderung des auf einer Fläche des Fahrzeugs lastenden Gewichts erfassen, wenn die Sendung auf der Fläche des Fahrzeugs abgelegt wird. Solche Gewichtssensoren sind in den meisten Fahrzeugen beispielsweise als Sitzbelegungssensoren vorgesehen. Ein Beladungssensor kann beispielsweise eine Veränderung der Beladung des Fahrzeugs erfassen, wenn die Sendung in den Innenraum des Fahrzeugs abgelegt wird. Beladungssensoren werden in Fahrzeugen beispielsweise zur automatischen Leuchtweitenregulierung verwendet. Eine Kamera oder ein Ultraschallsensor ist in vielen Fahrzeugen als Teil der Alarmanlage zur Überwachung des Innenraums vorgesehen. Eine solche Kamera oder ein solcher Ultraschallsensor kann eine Veränderung im Innenraum des Fahrzeugs durch das Ablegen der Sendung in den Innenraum des Fahrzeugs erfassen.

Dass eine tragbare Zustellervorrichtung sich in der Umgebung der Steuervorrichtung und/oder des Fahrzeugs befindet, ist beispielsweise durch Kommunikationsmittel der Steuervorrichtung und/oder des Fahrzeugs (z.B. durch eine Kommunikationsschnittstelle einer lokalen Funknetztechnik) erfassbar. Zum Beispiel wird davon ausgegangen, dass sich die tragbare Zustellervorrichtung in der Umgebung der Steuervorrichtung und/oder des Fahrzeugs befindet, solange sich die Zustellervorrichtung innerhalb der Reichweite der Kommunikationsmittel einer solchen lokalen Funknetztechnik befindet. Beispielsweise wird die Umgebung der Steuervorrichtung und/oder des Fahrzeugs durch die Reichweite der Kommunikationsmittel bestimmt. Die Reichweite eines Kommunikationssignals gemäß einer solchen Funknetztechnik ist beispielsweise auf weniger als 250 m, beispielsweise weniger als 100 m, vorzugweise weniger als 50 m, besonders vorzugsweise auf weniger als 20 m beschränkt. Ein Beispiel für ein solches Kommunikationssignal ist ein RFID-, ein Bluetooth-, ein NFC und/oder ein WLAN-Signal.

Beispielsweise erfassen die Kommunikationsmittel, dass sich eine tragbare Zustellervorrichtung in der Umgebung der Steuervorrichtung und/oder des Fahrzeugs befindet, durch Empfangen eines Kommunikationssignals (z.B. eines RFID-, eines Bluetooth-, eines NFC und/oder eines WLAN-Signals) von der Zustellervorrichtung. Zum Beispiel sendet die tragbare Zustellervorrichtung ein solches Kommunikationssignal zumindest während des Zustellvorgangs am Fahrzeug wiederholt (z.B. periodisch) aus. Es ist auch denkbar, dass die tragbare Zustellervorrichtung ein solches Kommunikationssignal in Reaktion auf ein von den Kommunikationsmitteln der Steuervorrichtung und/oder des Fahrzeugs ausgesendetes Anfrage-Kommunikationssignal aussendet. Solange das Kommunikationssignal durch Kommunikationsmittel einer drahtlosen lokalen Kommunikationstechnik der Steuervorrichtung und/oder des Fahrzeugs empfangbar ist, ist der Zustellvorgang am Fahrzeug zumindest mit hoher Wahrscheinlichkeit nicht abgeschlossen und es befindet sich zumindest mit hoher Wahrscheinlichkeit ein Zusteller in der Umgebung des Fahrzeugs. Sobald das Kommunikationssignal durch Kommunikationsmittel einer drahtlosen lokalen Kommunikationstechnik der Steuervorrichtung und/oder des Fahrzeugs nicht mehr empfangbar ist, ist der Zustellvorgang am Fahrzeug zumindest mit hoher Wahrscheinlichkeit abgeschlossen oder abgebrochen.

Eine Benutzereingabe zum Abschluss des Zustellungsvorgangs durch den Zusteller an einer tragbaren Zustellervorrichtung ist beispielsweise durch Erfassungsmittel der Zustellervorrichtung wie Benutzereingabemittel (z.B. eine Tastatur) erfassbar. Zum Beispiel bestätigt der Zusteller den Abschluss des Zustellungsvorgangs durch eine Benutzereingabe an der tragbaren Zustellervorrichtung.

Das Überschreiten einer vorgegebenen Dauer des Zustellungsvorgangs am Fahrzeug seit dem Bewirken des Entriegelns der Tür des Fahrzeugs und/oder seit dem Erhalten einer Zustellungsereignisinformation (z.B. einer mit dem Empfangen eines Kommunikationssignals von einer tragbaren Zustellervorrichtung durch Kommunikationsmittel der Steuervorrichtung und/oder des Fahrzeugs assoziierten Zustellungsereignisinformation) lässt beispielsweise mit einer hohen Wahrscheinlichkeit auf den Abschluss und/oder den Abbruch des Zustellungsvorgangs am Fahrzeug schließen. Die vorgegebene Dauer entspricht beispielsweise einer durchschnittlichen Dauer oder einer erwarteten maximalen Dauer eines Zustellungsvorgangs am Fahrzeug oder einer erwarteten maximalen Dauer bis zum nächsten Zustellungsereignis. Das Überschreiten der vorgegebenen Dauer kann beispielsweise mit Hilfe einer Uhr und/oder einer Timerfunktion erfasst werden.

Gemäß einer beispielhaften Ausführungsform der Erfindung wird das Entriegeln nur dann bewirkt, wenn mehrere Zustellungsereignisinformationen erhalten werden und die erhaltenen Zustellungsereignisinformationen mit mehreren vorgegebenen Zustellungsereignissen und/oder mit einer oder mehreren vorgegebenen Zustellungsereigniskombinationen assoziiert sind. Zum Beispiel ist eine vorgegebene Zustellungsereigniskombination eine Kombination von zwei voneinander verschiedene Zustellungsereignisse, so dass das Entriegeln in diesem Beispiel nur dann bewirkt wird, wenn zumindest zwei Zustellungsereignisinformationen erhalten werden und eine der erhaltenen Zustellungsereignisinformationen mit einem der zwei vorgegebenen Zustellungsereignissen assoziiert ist und eine andere der erhaltenen Zustellungsereignisinformationen mit dem anderen der zwei vorgegebenen Zustellungsereignissen assoziiert ist. Es sind auch Fälle denkbar, in denen eine vorgegebene Zustellungsereigniskombination eine Kombination von mehr als zwei verschiedenen Zustellungsereignissen ist, beispielsweise drei, vier oder fünf verschiedenen Zustellungsereignisse. Ferner sind auch Fälle denkbar, in denen verschiedene Zustellungsereigniskombinationen vorgeben sind, wobei das Entriegeln in diesem Fällen beispielsweise nur dann bewirkt wird, wenn mehrere Zustellungsereignisinformationen erhalten werden und die erhaltenen Zustellungsereignisinformationen zumindest mit den Zustellungsereignissen einer der mehreren vorgegebenen Zustellungsereigniskombinationen assoziiert sind

Alternativ oder zusätzlich können eine oder mehrere Reihenfolge der vorgegebenen Zustellungsereignisse und/oder Zustellungsereigniskombinationen vorgegeben sein, so dass das Entriegeln beispielsweise nur dann bewirkt wird, wenn die Zustellungsereignisinformationen in einer der vorgegebenen Reihenfolge erhalten werden (z.B. in einer der vorgegebenen Reihenfolge der vorgegebenen Zustellungsereignisse).

Gemäß der Erfindung ist zumindest eines der vorgegebenen Zustellungsereignisse das durch Erfassungsmittel des Fahrzeugs erfassbare Ablegen der Sendung in den Innenraum des Fahrzeugs. Das Erfassungsmittel in dem Fahrzeug wird auch für andere Zwecke wie zum Beispiel zur Erfassung der Sitzbelegung und/oder zur Innenraumüberwachung verwendet. Dies ist beispielsweise vorteilhaft, um zu vermeiden, dass zusätzliche Erfassungsmittel in der Steuervorrichtung und/oder dem Fahrzeug vorgesehen werden müssen.

Gemäß der Erfindung umfasst das Verfahren das Erfassen des Ablegens einer Sendung in einen Innenraum des Fahrzeugs von einem Erfassungsmittel des Fahrzeugs als zumindest eines der vorgegebenen Zustellungsereignisse. Ferner umfasst das Verfahren das Erzeugen der mit diesem zumindest einen erfassten Zustellungsereignis assoziierten Zustellungsereignisinformation.

Das zumindest eine der vorgegebenen Zustellungsereignisse wird durch ein Erfassungsmittel des Fahrzeugs erfasst. Das Erfassungsmittel ist eingerichtet, dieses zumindest eine der vorgegebenen Zustellungsereignisse zu erfassen. Das Erfassungsmittel ist ferner eingerichtet, die mit diesem zumindest einen erfassten Zustellungsereignis assoziierte Zustellungsereignisinformation zu erzeugen.

Ein Beispiel für Erfassungsmittel ist ein Sensor wie beispielsweise eine Kamera, ein Türöffnungssensor, ein Ultraschallsensor, ein Beladungssensor und/oder ein Gewichtssensor. Ein weiteres Beispiel für Erfassungsmittel ist eine Messeinheit wie eine Uhr und/oder eine Timerfunktion. Ein weiteres Beispiel für Erfassungsmittel ist ein Benutzereingabemittel wie eine Tastatur. Ein weiteres Beispiel für Erfassungsmittel ist ein Kommunikationsmittel wie eine Kommunikationsschnittstelle.

Das Erfassungsmittel ist kein Teil der Steuervorrichtung.Das Erfassungsmittel ist eingerichtet, die mit dem zumindest einen erfassten Zustellungsereignis assoziierte Zustellungsereignisinformation zu erzeugen und an Kommunikationsmittel der Steuervorrichtung zu kommunizieren.

Gemäß einer beispielhaften Ausführungsform der Erfindung werden die Zugangsberechtigungsinformation und/oder die Zustellungsereignisinformationen über eine oder mehrere drahtlose Kommunikationsverbindungen an der Steuervorrichtung empfangen und/oder von der Steuervorrichtung gesendet. Zum Beispiel umfasst die Steuervorrichtung Kommunikationsmittel, die eingerichtet sind, Informationen (z.B. die Zugangsberechtigungsinformation) über eine oder mehrere drahtlose Kommunikationsverbindungen mittelbar und/oder unmittelbar zu empfangen und/oder zu senden.

Zum Beispiel sind die Kommunikationsmittel der Steuervorrichtung eingerichtet, Informationen (z.B. die Zugangsberechtigungsinformation) unmittelbar über eine oder mehrere drahtlose Kommunikationsverbindungen zu empfangen und/oder zu senden. In diesem Fall sind die Kommunikationsmittel der Steuervorrichtung beispielsweise eine Kommunikationsschnittstelle einer oder mehrerer drahtloser Kommunikationstechniken.

Alternativ oder zusätzlich können die Kommunikationsmittel der Steuervorrichtung auch eingerichtet sein, Informationen (z.B. die Zugangsberechtigungsinformation) mittelbar (z.B. über Kommunikationsmittel des Fahrzeugs) über eine oder mehrere drahtlose Kommunikationsverbindungen zu empfangen und/oder zu senden. In diesem Fall sind die Kommunikationsmittel der Steuervorrichtung beispielsweise eine Fahrzeugschnittstelle wie eine Schnittstelle eines Fahrzeug-Bus und/oder eine Fahrzeugdiagnoseschnittstelle. Zum Beispiel werden die Informationen unmittelbar durch Kommunikationsmittel des Fahrzeugs über eine oder mehrere drahtlose Kommunikationsverbindungen empfangen und anschließend (z.B. über eine Fahrzeugdiagnoseschnittstelle und/oder einen Fahrzeug-Bus) an die Kommunikationsmittel der Steuervorrichtung kommuniziert, und/oder durch die Kommunikationsmittel der Steuervorrichtung an die Kommunikationsmittel des Fahrzeugs (z.B. über eine Fahrzeugdiagnoseschnittstelle und/oder über einen Fahrzeug-Bus) kommuniziert und anschließend durch Kommunikationsmittel des Fahrzeugs über eine oder mehrere drahtlose Kommunikationsverbindungen gesendet. Ein Beispiel für einen Fahrzeug-Bus ist ein Controller Area Network-Bus (CAN-Bus), ein K-Leitungs-Bus, ein L-Leitungs-Bus und/oder ein IDB-1394-Bus. Ein Beispiel für eine Fahrzeugdiagnoseschnittstelle ist eine K-Leitungs-Schnittstelle, eine L-Leitungs-Schnittstelle und/oder eine On-Board-Diagnose-Schnittstelle (OBD-Schnittstelle).

Zum Beispiel ist die Steuervorrichtung über zumindest eine der drahtlosen Kommunikationsverbindungen mit einer Fernüberwachungsvorrichtung verbindbar und/oder verbunden. Beispielsweise kann die Steuervorrichtung über diese zumindest eine der drahtlosen Kommunikationsverbindungen mit der Fernüberwachungsvorrichtung kommunizieren. Zum Beispiel sind über diese Kommunikationsverbindung Informationen von der Fernüberwachungsvorrichtung an der Steuervorrichtung empfangbar und/oder von der Steuervorrichtung an die Fernüberwachungsvorrichtung sendbar.

Zum Beispiel ist die Steuervorrichtung über zumindest eine der drahtlosen Kommunikationsverbindungen mit einer Zustellervorrichtung verbindbar und/oder verbunden. Beispielsweise kann die Steuervorrichtung über diese zumindest eine der drahtlosen Kommunikationsverbindungen mit der Zustellervorrichtung kommunizieren. Zum Beispiel sind über diese Kommunikationsverbindung Informationen von der Zustellervorrichtung an der Steuervorrichtung empfangbar und/oder von der Steuervorrichtung an die Zustellervorrichtung sendbar.

Zum Beispiel ist zumindest eine der drahtlosen Kommunikationsverbindungen eine Kommunikationsverbindung über ein Mobilfunknetz. Zum Beispiel ist die Steuervorrichtung über diese Kommunikationsverbindung über ein Mobilfunknetz mit der Fernüberwachungsvorrichtung verbunden.

Zum Beispiel ist zumindest eine der drahtlosen Kommunikationsverbindungen eine Kommunikationsverbindung über ein lokales Funknetz. Zum Beispiel ist die Steuervorrichtung über diese Kommunikationsverbindung über ein lokales Funknetz mit der Zustellervorrichtung verbunden.

Es sind Fälle auch denkbar, in denen die Steuervorrichtung mit der Fernüberwachungsvorrichtung, nicht jedoch mit der Zustellervorrichtung verbunden und/oder verbindbar ist. Zum Beispiel sind in diesen Fällen Informationen von der Fernüberwachungsvorrichtung an der Steuervorrichtung über eine drahtlose Kommunikationsverbindung empfangbar. Zum Beispiel sind die Kommunikationsmittel der Steuervorrichtung eingerichtet, Informationen (z.B. die Zugangsberechtigungsinformation) mittelbar oder unmittelbar über eine oder mehrere drahtlose Kommunikationsverbindungen (z.B. über eine drahtlose Kommunikationsverbindung über ein Mobilfunknetz) von der Fernüberwachungsvorrichtung (z.B. nicht jedoch von der Zustellervorrichtung) zu empfangen und/oder an die Fernüberwachungsvorrichtung (z.B. nicht jedoch an die Zustellervorrichtung) zu senden. In diesen Fällen kann die Zustellervorrichtung beispielsweise nur über die Fernüberwachungsvorrichtung mit der Steuervorrichtung kommunizieren. Dies ist beispielsweise vorteilhaft, um eine Überwachung der Kommunikation zwischen der Steuervorrichtung und der Zustellervorrichtung zu ermöglichen und eine missbräuchliche Verwendung der Zustellervorrichtung, beispielsweise durch einen Unberechtigten, der sich Zugang zu dem Fahrzeug verschaffen möchte, zu verhindern.

Das System umfasst ferner zumindest eine tragbare Zustellervorrichtung und kann darüber hinaus eine oder mehrere Fernüberwachungsvorrichtungen umfassen.

Gemäß einer beispielhaften Ausführungsform der Erfindung umfasst das Verfahren ferner:
- Entscheiden, ob Zugang für die Zustellung in das Fahrzeug gewährt werden darf, zumindest teilweise in Abhängigkeit der erhaltenen Zugangsberechtigungsinformation, und
- Bewirken des Entriegelns der Tür des Fahrzeugs nur dann, wenn entschieden wurde, das Zugang gewährt werden darf.

Zum Beispiel wird die Zugangsberechtigungsinformation von einer Zustellervorrichtung an die Steuervorrichtung (z.B. an Kommunikationsmittel der Steuervorrichtung) kommuniziert. Alternativ oder zusätzlich ist auch denkbar, dass die Zugangsberechtigungsinformation von einer Fernüberwachungsvorrichtung an die Steuervorrichtung (z.B. an Kommunikationsmittel der Steuervorrichtung) kommuniziert wird. Wie oben offenbart, kann die Zugangsberechtigungsinformation beispielsweise über eine drahtlose Kommunikationsverbindung an die Steuervorrichtung kommuniziert werden.

Unter Entscheiden, ob Zugang gewährt werden darf, soll verstanden werden, dass geprüft wird, ob die erhaltene Zugangsberechtigungsinformation zum Zugang berechtigt (z.B. durch die Steuervorrichtung). Zum Beispiel umfasst die Steuervorrichtung Prüfmittel, die eingerichtet sind, zu prüfen, ob die erhaltene Zugangsberechtigungsinformation zum Zugang berechtigt.

Die Zugangsberechtigungsinformation enthält zum Beispiel ein oder mehrere Zugangsberechtigungsparameter. Dabei kann es sich beispielsweise um eine (insbesondere eindeutige) Kennung für die Steuervorrichtung und/oder das Fahrzeug, eine (insbesondere eindeutige) Kennung für die Zugangsberechtigungsinformation selbst, zeitliche Gültigkeitsinformationen (z.B. in Form eines "Nicht-Vor-Datums", eines "Nicht-Nach-Datums", einer "Startzeit des Tages" und einer "Endzeit des Tages", die angeben, innerhalb welcher Tage und innerhalb welcher Tageszeit Zugang für die Zustellung gewährt werden darf, beispielsweise vom 27.3.2014 00:00:00 Uhr bis zum 28.3.2014 23:59:59 Uhr), eine räumliche Gültigkeitsinformation (z.B. in Form eines Radius um eine Zustellkoordinate und/oder Zustellposition, in dem Zugang gewährt werden darf), eine Obergrenze der erlaubten Nutzungen der Zugangsberechtigungsinformation, um Zugang zu erhalten, und einer Information, in welchem Ausmaß Zugang gewährt werden darf (also beispielsweise ob alle Türen eines Fahrzeugs geöffnet werden dürfen, oder nur eine oder eine bestimmte Gruppe).

Zumindest eine vordefinierte Menge (z.B. alle, oder nur einige) der Zugangsberechtigungsparameter werden hinsichtlich jeweiliger Bezugsinformationen darauf geprüft, ob sie jeweils zum Zugang berechtigen.

Beispielsweise kann die Kennung für die Steuervorrichtung als Zugangsberechtigungsparameter hinsichtlich einer in der Steuervorrichtung gespeicherten Kennung der Steuervorrichtung geprüft werden und bei Übereinstimmung festgestellt werden, dass dieser Zugangsberechtigungsparameter zum Zugang berechtigt. Dies ist beispielsweise vorteilhaft, wenn die Steuervorrichtung eine Steuervorrichtung einer Vielzahl von Steuervorrichtungen ist, um sicherzustellen, dass die Zugangsberechtigungsinformation nur zum Zugang gegenüber der Steuervorrichtung mit der entsprechenden Kennung berechtigt.

Die zeitlichen Gültigkeitsinformationen als Zugangsberechtigungsparameter können beispielsweise hinsichtlich einer von einer Uhr der Steuervorrichtung erhaltenen zeitlichen Information (z.B. Datum und Uhrzeit) geprüft werden, beispielsweise dergestalt, dass ein durch die Gültigkeitsinformationen definierter Zustellungszeitraum den aktuellen Zeitpunkt laut Uhr der Steuervorrichtung enthalten muss, damit Zugang gewährt werden kann. Der Zustellungszeitraum kann beispielsweise ein durch den Empfänger der Sendung und/oder den Besitzer des Fahrzeugs vorgegebener Zustellungszeitraum sein. Dies ist beispielsweise vorteilhaft, um den Zustellungszeitraum einzuschränken, so dass der Besitzer des Fahrzeugs zum Beispiel für diesen Zeitraum Wertgegenstände aus dem Fahrzeug entfernen kann.

Die räumlichen Gültigkeitsinformationen als Zugangsberechtigungsparameter können beispielsweise hinsichtlich einer von einem Positionierungssensor der Steuervorrichtung und/oder des Fahrzeugs an der Steuervorrichtung erhaltenen räumlichen Information (z.B. aktuelle oder letzte Koordinaten und/oder Position) geprüft werden, beispielsweise dergestalt, dass ein durch die Gültigkeitsinformationen definierter Zustellungsbereich (z.B. ein Radius um eine Zustellposition) die aktuellen Koordinaten und/oder die aktuelle Position der Steuervorrichtung und/oder des Fahrzeugs enthalten muss, damit Zugang gewährt werden kann. Der Zustellungsbereich kann beispielsweise ein durch den Empfänger der Sendung und/oder den Besitzer des Fahrzeugs vorgegebener Zustellungsbereich sein. Der Positionierungssensor kann beispielsweise ein Positionierungssensor eines Fahrzeugnavigationssystems sein, z.B. ein Global-Positioning-System-Sensor (GPS-Sensor). Dies ist beispielsweise vorteilhaft, um den Zustellungsbereich einzuschränken.

Zugang wird also zum Beispiel gewährt, wenn für zumindest eine bestimmte Menge der Zugangsberechtigungsparameter festgestellt wurde, dass diese hinsichtlich ihrer jeweiligen Bezugsinformation in der Steuervorrichtung zum Zugang berechtigen. Wenn entschieden wird, dass Zugang gewährt werden darf, wird beispielsweise ein entsprechendes Steuersignal ausgegeben, beispielsweise an die Verriegelungsmittel (z.B. das Schloss). Anderenfalls werden beispielsweise ein optischer und/oder akustischer Alarm und/oder eine Warnung ausgegeben und/oder eine entsprechende Information an eine Fernüberwachungsvorrichtung kommuniziert.

Zum Beispiel wird Zugang gewährt, indem das Entriegeln der zumindest einen Tür des Fahrzeugs bewirkt wird (z.B. durch die Steuervorrichtung). Wie oben beschrieben, können die Steuermittel der Steuervorrichtung eingerichtet sein, das Schloss zu steuern und somit beispielsweise ein Öffnen des Schlosses (d.h. ein Entriegeln der Tür) und/oder ein Schließen des Schlosses (d.h. ein Verriegeln der Tür) bewirken zu können.

Zum Beispiel berechtigt die Zugangsberechtigungsinformation ausschließlich zum Zugang für die Zustellung in das Fahrzeug.

Gemäß einer beispielhaften Ausführungsform der Erfindung ist die Zugangsberechtigungsinformation nur für eine beschränkte Anzahl von Zugängen gültig. Zum Beispiel ist die Zugangsberechtigungsinformation nur für eine beschränkte Anzahl von Zugängen in das Fahrzeug und/oder weitere Fahrzeuge gültig. Zum Beispiel ist die Zugangsberechtigungsinformation nur für einen einzigen Zugang in das Fahrzeug gültig.

Gemäß einer beispielhaften Ausführungsform der Erfindung ist das Fahrzeug ein Landfahrzeug, beispielsweise ein Kraftfahrzeug wie ein Lastkraftwagen oder ein Personenkraftwagen, besonders vorzugsweise ein Personenkraftwagen (z.B. ein Auto).

Gemäß einer beispielhaften Ausführungsform der Erfindung ist die Tür eine Kofferraumtür des Fahrzeugs.

Gemäß einer beispielhaften Ausführungsform der Erfindung wird ausschließlich das Entriegeln der Kofferraumtür des Fahrzeugs bewirkt.

Gemäß einer beispielhaften Ausführungsform der Erfindung umfasst das Verfahren ferner:
- Öffnen der Tür und/oder Bewirken des Öffnens der Tür, und/oder
- Schließen der Tür und/oder Bewirken des Schließens der Tür.

Zum Beispiel kann die Tür durch den Zusteller geöffnet und/oder geschlossen werden.

Alternativ oder zusätzlich kann die Tür beispielsweise auch durch Öffnungs- und Schließmittel der Tür geöffnet und/oder geschlossen werden. Zum Beispiel sind Steuermittel der Steuervorrichtung eingerichtet, ein Steuersignal abzusetzen, beispielsweise an Öffnungs- und Schließmittel der Tür, um beispielsweise ein Öffnen und/oder Schließen der Tür zu veranlassen. Dies ist beispielsweise vorteilhaft, um sicherzustellen, dass die Tür nach Abschluss des Zustellungsvorgangs am Fahrzeug auch tatsächlich geschlossen werden kann (z.B. wenn der Zusteller das Schließen der Tür vergisst).

Es ist beispielsweise denkbar, dass die Steuervorrichtung, die Öffnungs- und Schließmittel der Tür umfasst. Die Öffnungs- und Schließmittel der Tür können jedoch auch separat von der Steuervorrichtung sein.

Ein Beispiel für solche Öffnungs- und Schließmittel ist ein elektronisch ansteuerbarer und durch einen Motor angetriebener Türöffner und -schließer. Zum Beispiel sind die Steuermittel der Steuervorrichtung eingerichtet, einen solchen Türöffner und - schließer zu steuern und somit beispielsweise ein Öffnen der Tür und/oder ein Schließen der Tür bewirken zu können.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: ein Blockschaltbild der elektronischen Komponenten einer beispielhaften Ausführungsform einer Steuervorrichtung;
- Figs. 2a und 2b: jeweils ein Blockdiagramm einer beispielhaften Ausführungsform eines erfindungsgemäßen Systems;
- Figs. 3a und 3b: jeweils ein Flussdiagramm eines Beispiels eines erfindungsgemäßen Verfahrens; und
- Fig. 4: ein Flussdiagramm eines Beispiels einer offenbarten Verwendung.

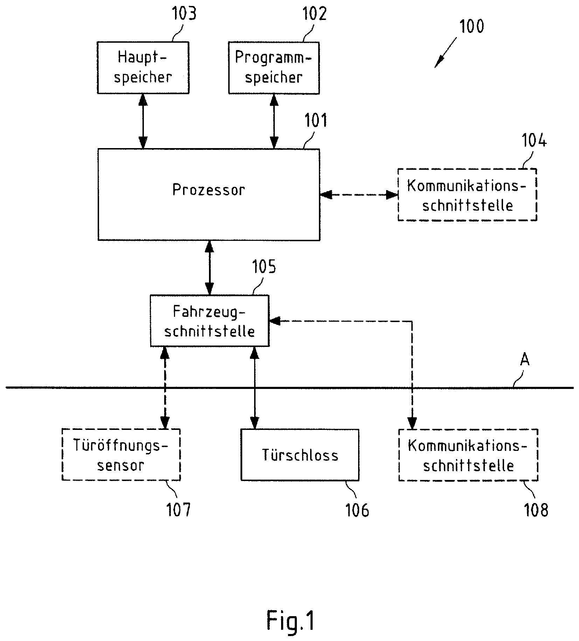

Fig. 1 ist ein Blockschaltbild einer beispielhaften Ausführungsform einer Steuervorrichtung 100.

Prozessor 101 der Steuervorrichtung 100 ist insbesondere als Mikrocontroller oder Mikroprozessor ausgebildet. Prozessor 101 führt Programmanweisungen aus, die in Programmspeicher 102 gespeichert sind, und speichert beispielsweise Zwischenergebnisse oder ähnliches in Hauptspeicher 103. Zum Beispiel ist Programmspeicher 102 ein nicht-flüchtiger Speicher wie ein Flash-Speicher, ein Magnetspeicher, ein EEPROM-Speicher, ein persistenter Speicher wie ein ROM-Speicher und/oder ein optischer Speicher. Hauptspeicher 103 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Vorzugsweise sind Programmspeicher 102 und Hauptspeicher 103 zusammen mit Prozessor 101 in einem Modul angeordnet.

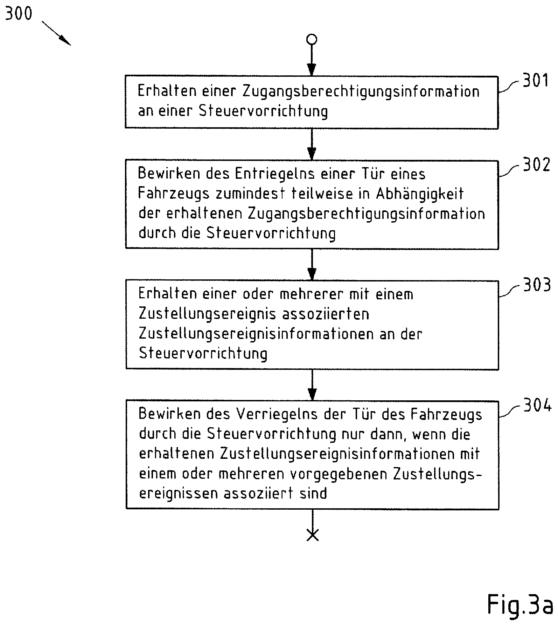

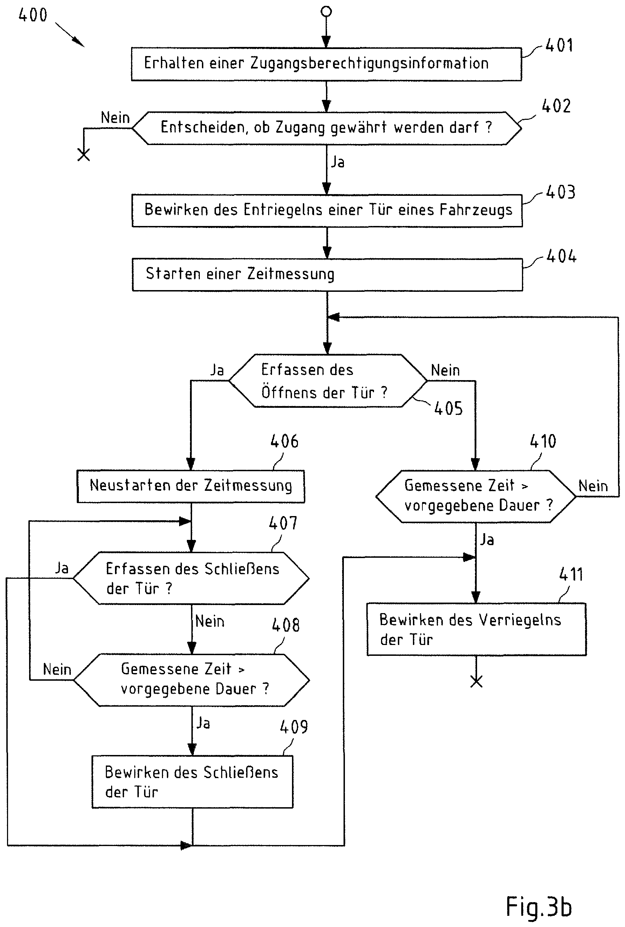

In Programmspeicher 102 sind beispielsweise Programmanweisungen gespeichert, die den Prozessor 101, wenn er die Programmanweisungen ausführt, veranlassen, zumindest teilweise die in Fig. 3a und 3b dargestellten Verfahren auszuführen und/oder zu steuern.

Die optionale drahtlose Kommunikationsschnittstelle 104 ist zum Beispiel eingerichtet, gemäß einer oder mehreren drahtlosen Kommunikationstechniken zu kommunizieren. Im Folgenden wird beispielhaft angenommen, dass die drahtlose Kommunikationsschnittstelle 104 die Kommunikation über ein lokales Funknetz und ein Mobilfunknetz unterstützt. Zum Beispiel wird die drahtlose Kommunikationsschnittstelle 104 zumindest teilweise durch einen Sendeempfänger der lokalen Funknetztechnik, einen Sendeempfänger der Mobilfunktechnik und eine oder mehrere Antennen gebildet. Wie oben offenbart, ist ein Beispiel für eine lokale Funknetztechnik RFID, NFC, Bluetooth und/oder WLAN; und ein Beispiel für eine Mobilfunktechnik ist GSM, UMTS und/oder LTE. Optional kann die drahtlose Kommunikationsschnittstelle 104 nur eine dieser drahtlosen Kommunikationstechniken oder weitere drahtlose Kommunikationstechniken unterstützen.

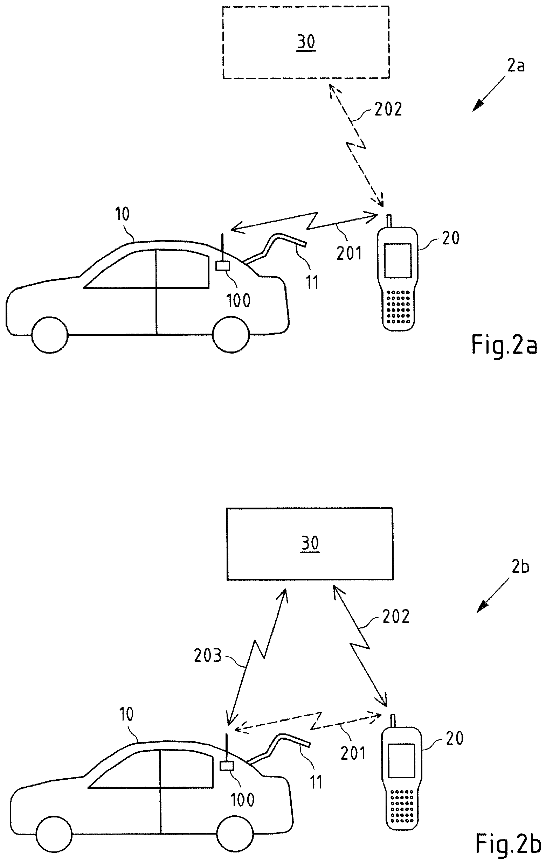

Der Prozessor 101 kann beispielsweise über die drahtlose Kommunikationsschnittstelle 104 mit anderen Vorrichtungen wie einer Fernüberwachungsvorrichtung (z.B. der Fernüberwachungsvorrichtung 30 in Fig. 2b) und/oder einer Zustellervorrichtung (z.B. der Zustellervorrichtung 20 in Figs. 2a und 2b) kommunizieren. Prozessor 101 ist beispielsweise operativ mit der drahtlosen Kommunikationsschnittstelle 104 verbunden. Beispielsweise kann die drahtlose Kommunikationsschnittstelle 104 Informationen von anderen Vorrichtungen empfangen oder abfragen und an Prozessor 101 weiterleiten und/oder Informationen von Prozessor 101 empfangen und an andere Vorrichtungen senden. Zum Beispiel steuert Prozessor 101 die Kommunikationsschnittstelle 104 zumindest teilweise.

Über die Fahrzeugschnittstelle 105 ist Prozessor 101 ferner mit Mitteln eines Fahrzeugs verbunden. Die Fahrzeugschnittstelle 105 ist beispielsweise eine Fahrzeugdiagnoseschnittstelle und/oder eine Schnittstelle eines Fahrzeug-Bus. Prozessor 101 ist beispielsweise operativ mit Fahrzeugschnittstelle 105 verbunden. Die Fahrzeugschnittstelle 105 ist eingerichtet, sich mit einer korrespondierenden Schnittstelle eines Fahrzeugs (z.B. des Fahrzeugs 10 in den Figs. 2a und 2b) mit einem Fahrzeug-Bus des Fahrzeugs zu verbinden und über den Fahrzeug-Bus mit Mitteln des Fahrzeugs (z.B. Türschloss 106, Türöffnungssensor 107 und/oder drahtlose Kommunikationsschnittstelle 108) zu kommunizieren. Die Fahrzeugschnittstelle 105 empfängt Informationen von Mitteln des Fahrzeugs (z.B. Türschloss 106, Türöffnungssensor 107 und/oder drahtlose Kommunikationsschnittstelle 108) und leitet diese an Prozessor 101 weiter. Außerdem kann die Fahrzeugschnittstelle 105 Informationen von Prozessor 101 empfangen und an Mittel des Fahrzeugs (z.B. Türschloss 106, Türöffnungssensor 107 und/oder drahtlose Kommunikationsschnittstelle 108) senden. Zum Beispiel steuert Prozessor 101 die Fahrzeugschnittstelle 105 zumindest teilweise.

Das Türschloss 106, der optionale Türöffnungssensor 107 und die optionale drahtlose Kommunikationsschnittstelle 108 sind kein Teil der Steuervorrichtung 100, sondern ein Teil des Fahrzeugs (z.B. des Fahrzeugs 10 in den Figs. 2a und 2b). Die Grenze zwischen Steuervorrichtung 100 und dem Fahrzeug ist in Fig. 1 durch die oberhalb des Türschloss 106, des Sensors 107 und der drahtlosen Kommunikationsschnittstelle 108 verlaufende Linie A angedeutet. Der Prozessor 101 kommuniziert mit dem Türschloss 106, dem Türöffnungssensor 107 und der drahtlosen Kommunikationsschnittstelle 108 über die Fahrzeugschnittstelle 105 und kann diese Mittel des Fahrzeugs über die Fahrzeugschnittstelle 105 zumindest teilweise steuern.

Das Türschloss 106 ist beispielsweise ein elektronisch ansteuerbares Schloss. Das Türschloss 106 ist zum Beispiel ein Schloss einer Tür des Fahrzeugs (z.B. ein Schloss der Tür 11 des Fahrzeugs 10 in Figs. 2a und 2b). Neben Türschloss 106 kann der Prozessor 101 über die Fahrzeugschnittstelle 105 mit weiteren Türschlössern des Fahrzeugs (z.B. des Fahrzeugs 10 in Figs. 2a und 2b) verbunden sein.

Zum Beispiel ist der optionale Türöffnungssensor 107 ein Türöffnungssensor der Tür mit dem Türschloss 106 des Fahrzeugs (z.B. ein Türöffnungssensor der Tür 11 des Fahrzeugs 10 in Figs. 2a und 2b). Der Türöffnungssensor 107 ist beispielsweise eingerichtet, zu erfassen, ob die Tür geöffnet oder geschlossen ist, und entsprechende Ereignisinformationen zu erzeugen. Zum Beispiel empfängt der Prozessor 101 entsprechende Ereignisinformationen, ob die Tür geöffnet ist und/oder geschlossen ist, über die Fahrzeugschnittstelle 105 von dem Türöffnungssensor 107. Neben Türöffnungssensor 107 kann der Prozessor 101 über die Fahrzeugschnittstelle 105 mit weiteren Sensoren des Fahrzeugs (z.B. des Fahrzeugs 10 in Figs. 2a und 2b) verbunden sein. Ein Beispiel für solche weiteren Sensoren sind ein Gewichtssensor, ein Sitzbelegungssensor und/oder ein Beladungssensor.

Die optionale drahtlose Kommunikationsschnittstelle 108 ist zum Beispiel wie die optionale Kommunikationsschnittstelle 104 eingerichtet und unterstützt die Kommunikation über ein lokales Funknetz und ein Mobilfunknetz. Optional kann die drahtlose Kommunikationsschnittstelle 108 nur eine dieser drahtlosen Kommunikationstechniken oder weitere drahtlose Kommunikationstechniken unterstützen.

Der Prozessor 101 ist beispielsweise über die Fahrzeugschnittstelle 105 operativ mit der drahtlosen Kommunikationsschnittstelle 108 verbunden. Der Prozessor 101 kann beispielsweise über die drahtlose Kommunikationsschnittstelle 108 mit anderen Vorrichtungen wie einer Fernüberwachungsvorrichtung (z.B. der Fernüberwachungsvorrichtung 30 in Fig. 2b) und/oder einer Zustellervorrichtung (z.B. der Zustellervorrichtung 20 in Figs. 2a und 2b) kommunizieren. Beispielsweise kann die drahtlose Kommunikationsschnittstelle 108 Informationen von anderen Vorrichtungen empfangen oder abfragen und über die Fahrzeugschnittstelle 105 an Prozessor 101 weiterleiten und/oder Informationen von Prozessor 101 über die Fahrzeugschnittstelle 105 empfangen und an andere Vorrichtungen senden. Zum Beispiel steuert Prozessor 101 die Kommunikationsschnittstelle 108 zumindest teilweise. Die drahtlose Kommunikationsschnittstelle 108 kann alternativ oder zusätzlich zu der drahtlosen Kommunikationsschnittstelle 104 vorgesehen sein.

Fig. 2a ist ein Blockdiagramm einer beispielhaften Ausführungsform des erfindungsgemäßen Systems 2a. Das System 2a umfasst ein Fahrzeug 10 und eine tragbare Zustellervorrichtung 20. Das Fahrzeug 10 ist ein PKW und umfasst die Steuervorrichtung 100 und eine Kofferraumtür 11. Die Steuervorrichtung 100 und die Zustellervorrichtung 20 sind über eine Kommunikationsverbindung 201 miteinander verbunden. Im Folgenden wird beispielhaft davon ausgegangen, dass die Kommunikationsverbindung 201 eine drahtlose Kommunikationsverbindung über ein lokales Funknetz umfasst

Die Zustellervorrichtung 20 ist beispielsweise ein von dem mit der Zustellung der Sendung in das Fahrzeug betrauten Zustellers eines Zustelldienstes elektronisches Gerät. Ein Beispiel für die Zustellervorrichtung 20 ist zum Beispiel ein Zustellergerät eines Zustelldienstes wie ein Handscanner, beispielsweise der Dolphin 99EX Mobile Computer der Firma Honeywell. Ein weiteres Beispiel für eine Zustellervorrichtung ist zum Beispiel ein "Tag" wie ein RFID- oder NFC-Tag, beispielsweise ein MiFARE DESFire von NXP.

Die optionale Fernüberwachungsvorrichtung 30 ist beispielsweise eine Fernüberwachungsvorrichtung eines Fahrzeugherstellers und/oder eines Zustelldienstes. Eine Fernüberwachungsvorrichtung eines Zustelldienstes überwacht beispielsweise den ordnungsgemäßen Ablauf einer oder mehrerer Zustellung (z.B. durch die Protokollierung und Auswertung von empfangenen Zustellungsereignisinformationen), disponiert eine oder mehrere Zustellungen und stellt die für die Zustellungen notwendigen Informationen (z.B. Zugangsberechtigungsinformationen) bereit. Eine Fernüberwachungsvorrichtung eines Fahrzeugherstellers überwacht beispielsweise die Funktion und Position eines oder mehrerer Fahrzeug und steuert Mittel eines oder mehrerer Fahrzeug (z.B. um die Fahrzeuge aus der Ferne zu warten, zu aktivieren, zu deaktivieren, zu entriegeln und/oder zu verriegeln).

Wie oben offenbart, ist die Zustellervorrichtung 20 in System 2a über die Kommunikationsverbindung 201 mit der Steuervorrichtung 100 verbunden. Die Zustellervorrichtung 20 ist in System 2a beispielsweise eingerichtet, mit der Kommunikationsschnittstelle 104 und/oder der Kommunikationsschnittstelle 108 der Steuervorrichtung 100 über die Kommunikationsverbindung 201 zu kommunizieren, beispielsweise eine Zugangsberechtigungsinformation an die Steuervorrichtung 100 zu senden.

Optional ist die Zustellervorrichtung 20 in System 2a ferner über die Kommunikationsverbindung 202 mit der Fernüberwachungsvorrichtung 30 verbunden. Im Folgenden wird beispielhaft davon ausgegangen, dass die Kommunikationsverbindung 202 eine drahtlose Kommunikationsverbindung über ein Mobilfunknetz umfasst. Zum Beispiel kann die Zustellervorrichtung 20 über die Kommunikationsverbindung 202 Informationen (z.B. Zustellungsereignisinformationen) an die Fernüberwachungsvorrichtung 30 senden und/oder Informationen (z.B. Zugangsberechtigungsinformationen) von der Fernüberwachungsvorrichtung 30 empfangen.

Die Kommunikationsverbindungen 201 und 202 sind in Fig. 2a beispielhaft als drahtlose Kommunikationsverbindungen dargestellt. Es ist jedoch beispielsweise auch denkbar, dass die Kommunikationsverbindungen 201 und/oder 202 nicht ausschließlich drahtlose Kommunikationsverbindungen sind, beispielsweise umfasst zumindest eine der Kommunikationsverbindungen 201 und/oder 202 zumindest eine drahtgebundene Kommunikationsverbindung und zumindest eine drahtlose Kommunikationsverbindung.

Fig. 2b ist ein Blockdiagramm einer beispielhaften Ausführungsform des erfindungsgemäßen Systems 2b. Das System 2b umfasst neben dem Fahrzeug 10 und der Zustellervorrichtung 20 eine Fernüberwachungsvorrichtung 30. Die Zustellervorrichtung 20 und die Fernüberwachungsvorrichtung 30 sind in System 2b über eine Kommunikationsverbindung 202 miteinander verbunden. Ferner sind die Fernüberwachungsvorrichtung 30 und die Steuervorrichtung 100 in System 2b über eine Kommunikationsverbindung 203 miteinander verbunden. Im Folgenden wird beispielhaft davon ausgegangen, dass die Kommunikationsverbindungen 202 und 203 jeweils eine drahtlose Kommunikationsverbindung über ein Mobilfunknetz umfassen.

Die Fernüberwachungsvorrichtung 30 ist in System 2b beispielsweise eingerichtet, mit der Kommunikationsschnittstelle 104 und/oder der Kommunikationsschnittstelle 108 der Steuervorrichtung 100 über die Kommunikationsverbindung 203 zu kommunizieren, beispielsweise eine Zugangsberechtigungsinformation an die Steuervorrichtung 100 zu senden und/oder von der Steuervorrichtung 100 zu empfangen.

Ferner ist die Zustellervorrichtung 20 in System 2b über die Kommunikationsverbindung 202 mit der Fernüberwachungsvorrichtung 30 verbunden. Zum Beispiel kann die Zustellervorrichtung 20 über die Kommunikationsverbindung 202 Informationen an die Fernüberwachungsvorrichtung 30 senden und/oder Informationen (z.B. Zugangsberechtigungsinformationen) von der Fernüberwachungsvorrichtung 30 empfangen. Beispielsweise kann die Zustellervorrichtung 20 über die Fernüberwachungsvorrichtung 30 mit der Steuervorrichtung 100 kommunizieren.

Die Kommunikationsverbindung 201 ist in System 2b lediglich optional und nicht zwingend vorhanden.

Die Kommunikationsverbindungen 201, 202 und 203 sind in Fig. 2b beispielhaft als drahtlose Kommunikationsverbindungen dargestellt. Es ist jedoch beispielsweise auch denkbar, dass die Kommunikationsverbindungen 201, 202 und 203 nicht ausschließlich drahtlose Kommunikationsverbindungen sind, beispielsweise umfasst zumindest eine der Kommunikationsverbindungen 201, 202 und/oder 203 zumindest eine drahtgebundene Kommunikationsverbindung und zumindest eine drahtlose Kommunikationsverbindung.

Fig. 3a ist ein Flussdiagramm 300, das beispielhaft die Schritte eines erfindungsgemäßen Verfahrens darstellt. Beispielsweise werden die Schritte zumindest teilweise von dem Prozessor 101 der Steuervorrichtung 100 ausgeführt und/oder gesteuert.

In einem Schritt 301 wird eine Zugangsberechtigungsinformation an der Steuervorrichtung 100 erhalten. Zum Beispiel wird die Zugangsberechtigungsinformation in Schritt 301 durch die Kommunikationsschnittstelle 104 oder durch die Kommunikationsschnittstelle 108 erhalten und an den Prozessor 101 weitergeleitet. Zum Beispiel wurde die Zugangsberechtigungsinformation von der Zustellervorrichtung 20 über die Kommunikationsverbindung 201 (vgl. Figs. 2a und 2b) oder von der Fernüberwachungsvorrichtung 30 über die Kommunikationsverbindung 203 (vgl. Fig. 2a) an die Steuervorrichtung 100 kommuniziert.

Die Zugangsberechtigungsinformation berechtigt zum Beispiel zum Zugang für die Zustellung in das Fahrzeug 10 oder enthält Informationen, die zum Zugang für die Zustellung in das Fahrzeug 10 berechtigen.

In einem Schritt 302 wird das Entriegeln der Tür 11 des Fahrzeugs 10 zumindest teilweise in Abhängigkeit der erhaltenen Zugangsberechtigungsinformation durch die Steuervorrichtung 100 bewirkt. Zum Beispiel wird in Schritt 302 zumindest teilweise in Reaktion auf das Erhalten der Zugangsberechtigungsinformation in Schritt 301 das Entriegeln der Tür 11 des Fahrzeugs 10 bewirkt.

Zum Beispiel ist der Prozessor 101 eingerichtet, das Türschloss 106 über Fahrzeugschnittstelle 105 derart anzusteuern, dass das Türschloss 106 geöffnet und die Tür 11 des Fahrzeugs 10 entriegelt wird, so dass die Tür 11 des Fahrzeugs 10 durch den Zusteller geöffnet werden kann.

In einem Schritt 303 werden eine oder mehrere mit einem Zustellungsereignis assoziierte Zustellungsereignisinformationen an der Steuervorrichtung 100 erhalten.

Wie oben offenbart, soll unter einem Zustellungsereignis beispielsweise ein Ereignis verstanden werden, das während des Zustellungsvorgangs am Fahrzeug 10 ausgelöst wird und durch entsprechende Erfassungsmittel erfassbar ist. Eine Zustellungsereignisinformation soll beispielsweise als mit einem Zustellungsereignis assoziiert verstanden werden, wenn die Zustellungsereignisinformation anzeigt, dass das Zustellungsereignis erfasst wurde, zum Beispiel durch entsprechende Erfassungsmittel erfasst wurde. Vorzugsweise werden die vorgegebenen Zustellungsereignisse durch eine Handlung des Zustellers während des Zustellungsvorgangs am Fahrzeug ausgelöst.

Zum Beispiel ist das Zustellungsereignis das Öffnen der Tür 11 des Fahrzeugs 10 und/oder das Schließen der Tür 11 des Fahrzeugs 10. Zum Beispiel erfasst der Türöffnungssensor 107 in Schritt 303, dass die Tür 11 des Fahrzeugs 10 geöffnet (also vom geschlossenen Zustand in den offenen zustand wechselt) und/oder geschlossen (also vom offenen Zustand in den geschlossenen Zustand wechselt) wird, und erzeugt eine oder mehrere entsprechende Zustellungsereignisinformationen. Gemäß der Erfindung ist zumindest eines der vorgegebenen Zustellungsereignisse das Ablegen der Sendung in einen Innenraum des Fahrzeugs 10, wobei das Ablegen von einem Erfassungsmittel des Fahrzeugs 10 erfasst wird und wobei das Erfassungsmittel in dem Fahrzeug 10 auch für andere Zwecke als das Erfassen des Ablegens der Sendung in den Innenraum des Fahrzeugs 10 verwendet wird. Das Erfassungsmittel erzeugt dabei die mit dem Ablegen assoziierte Zustellungsereignisinformation und kommuniziert diese an Kommunikationsmittel der Steuervorrichtung 100, wobei die Steuervorrichtung 100 prüft, ob die eine oder die mehreren erhaltenen Zustellungsereignisinformationen mit dem einen oder den mehreren vorgegebenen Zustellungsereignissen assoziiert sind. Zum Beispiel empfängt der Prozessor 101 diese Zustellungsereignisinformationen in Schritt 303 über Fahrzeugschnittstelle 105.

In einem Schritt 304 wird das Verriegeln der Tür des Fahrzeugs durch die Steuervorrichtung nur dann bewirkt, wenn die erhaltenen Zustellungsereignisinformationen mit einem oder mehreren vorgegebenen Zustellungsereignissen assoziiert sind. Das vorgegebene Zustellungsereignis oder die vorgegebenen Zustellungsereignisse sind beispielsweise derart gewählt, dass das Auslösen des vorgegebenen Zustellungsereignisses oder der vorgegebenen Zustellungsereignisse zumindest mit einer hohen Wahrscheinlichkeit auf den Abschluss oder den Abbruch des Zustellungsvorgangs am Fahrzeug 10 schließen lässt.

Zum Beispiel ist der Prozessor 101 eingerichtet, das Türschloss 106 nur dann über Fahrzeugschnittstelle 105 derart anzusteuern, dass das Türschloss 106 geschlossen und die Tür 11 des Fahrzeugs 10 verriegelt wird, wenn die in Schritt 303 erhaltenen Zustellungsereignisinformationen mit einem oder mehreren vorgegebenen Zustellungsereignissen assoziiert sind.

Wie oben offenbart, ist zumindest eines der vorgegebenen Zustellungsereignisse gemäß der Erfindung das Ablegen der Sendung in den Innenraum des Fahrzeugs 10. Zum Beispiel ist ein weiteres vorgegebenes Zustellungsereignis das Schließen der Tür 11 des Fahrzeugs 10. Es ist denkbar, dass mehrere Zustellungsereignisse oder Zustellungsereigniskombinationen und deren Reihenfolge vorgegeben sind

Fig. 3b ist ein Flussdiagramm 400, das beispielhaft die Schritte eines erfindungsgemäßen Verfahrens darstellt. Die im Flussdiagramm 400 dargestellten Schritte werden von Mitteln der Steuervorrichtung 100 und/oder des Fahrzeugs 10 ausgeführt und/oder gesteuert. Beispielsweise werden die Schritte zumindest teilweise von dem Prozessor 101 der Steuervorrichtung 100 ausgeführt und/oder gesteuert.

Im Folgenden wird beispielhaft davon ausgegangen, dass aus Sicherheitsgründen verschiedene Zustellereignisse, Zustellereigniskombinationen und deren Reihenfolge vorgegeben sind, die zum Verriegeln der Tür 11 des Fahrzeugs 10 führen sollen. So soll das Verriegeln der Tür bewirkt werden, wenn die Tür 11 geöffnet und anschließend geschlossen wird oder wenn die Tür 11 geöffnet und nicht in einer vorgegebenen Dauer geschlossen wird. Außerdem soll das Verriegeln der Tür bewirkt werden, wenn die Tür 11 entriegelt und nicht in der vorgegebenen Dauer geöffnet wird. Die Erfindung ist jedoch nicht auf diese vorgegebenen Zustellungsereignisse und deren Reihenfolge beschränkt.

In einem Schritt 401 wird eine Zugangsberechtigungsinformation an der Steuervorrichtung 100 erhalten. Der Schritt 401 entspricht beispielsweise dem oben beschriebenen Schritt 301.

In einem Schritt 402 wird zumindest teilweise in Abhängigkeit der erhaltenen Zugangsberechtigungsinformation entschieden, ob Zugang gewährt werden darf. Zum Beispiel prüft der Prozessor 101 in Schritt 402, ob die erhaltene Zugangsberechtigungsinformation zum Zugang berechtigt.

Wie oben offenbart, enthält die Zugangsberechtigungsinformation zum Beispiel ein oder mehrere Zugangsberechtigungsparameter. Dabei kann es sich beispielsweise um eine (insbesondere eindeutige) Kennung für die Steuervorrichtung 100 und/oder das Fahrzeug 10, eine (insbesondere eindeutige) Kennung für die Zugangsberechtigungsinformation selbst, zeitliche Gültigkeitsinformationen (z.B. ein Zustellungszeitraum), eine räumliche Gültigkeitsinformation (z.B. ein Zustellungsbereich), eine Obergrenze der erlaubten Nutzungen der Zugangsberechtigungsinformation, um Zugang zu erhalten, und eine Information, in welchem Ausmaß Zugang gewährt werden darf (also beispielsweise ob alle Türen des Fahrzeugs 10 geöffnet werden dürfen, oder beispielsweise nur die Tür 11 des Fahrzeugs 10).

Zumindest eine vordefinierte Menge (z.B. alle, oder nur einige) der Zugangsberechtigungsparameter werden hinsichtlich jeweiliger Bezugsinformationen darauf geprüft, ob sie jeweils zum Zugang berechtigen. Beispielsweise kann die Kennung für die Steuervorrichtung 100 als Zugangsberechtigungsparameter hinsichtlich einer in der Steuervorrichtung 100 gespeicherten Kennung der Steuervorrichtung 100 geprüft werden und bei Übereinstimmung festgestellt werden, dass dieser Zugangsberechtigungsparameter zum Zugang berechtigt.

Die zeitlichen Gültigkeitsinformationen als Zugangsberechtigungsparameter können beispielsweise hinsichtlich einer von einer Uhr der Steuervorrichtung 100 erhaltenen zeitlichen Information (z.B. Datum und Uhrzeit) geprüft werden, beispielsweise dergestalt, dass ein durch die Gültigkeitsinformationen definierter Zustellungszeitraum den aktuellen Zeitpunkt laut Uhr der Steuervorrichtung 100 enthalten muss, damit Zugang gewährt werden kann. Der Zustellungszeitraum kann beispielsweise ein durch den Empfänger der Sendung und/oder den Besitzer des Fahrzeugs 10 vorgegebener Zustellungszeitraum sein.

Die räumlichen Gültigkeitsinformationen als Zugangsberechtigungsparameter können beispielsweise hinsichtlich einer von einem Positionierungssensor der Steuervorrichtung 100 und/oder des Fahrzeugs 10 am Prozessor 101 erhaltenen räumlichen Information (z.B. die aktuellen Koordinaten und/oder die aktuelle Position) geprüft werden, beispielsweise dergestalt, dass ein durch die Gültigkeitsinformationen definierter Zustellungsbereich (z.B. ein Radius um eine Zustellposition) die aktuellen Koordinaten und/oder die aktuelle Position der Steuervorrichtung 100 und/oder des Fahrzeugs 10 enthalten muss, damit Zugang gewährt werden kann. Der Zustellungsbereich kann beispielsweise ein durch den Empfänger der Sendung und/oder den Besitzer des Fahrzeugs 10 vorgegebener Zustellungsbereich sein.

Zugang wird also zum Beispiel gewährt, wenn für zumindest eine bestimmte Menge der Zugangsberechtigungsparameter festgestellt wurde, dass diese hinsichtlich ihrer jeweiligen Bezugsinformation in der Steuervorrichtung 100 zum Zugang berechtigen.

Falls in Schritt 402 entschieden wird, dass Zugang gewährt werden darf, wird das Flussdiagramm 400 mit Schritt 403 fortgesetzt. Andernfalls endet das Flussdiagramm 400.

In einem Schritt 403 wird das Entriegeln der Tür 11 des Fahrzeugs 10, beispielsweise wie oben zu Schritt 302 offenbart, bewirkt.

In einem Schritt 404 wird eine Zeitmessung gestartet. Zum Beispiel ist der Prozessor 101 eingerichtet, das Messen der Zeit zu starten und die Zeit zu messen (z.B. durch eine Timerfunktion und/oder eine Uhrfunktion).

In einem Schritt 405 wird geprüft, ob das Öffnen der Tür 11 durch den Türöffnungssensor 107 erfasst wurde. Zum Beispiel ist der Prozessor 101 eingerichtet, zu prüfen, ob eine entsprechende Zustellungsereignisinformation, die anzeigt, dass das Öffnen der Tür 11 durch den Türöffnungssensor 107 erfasst wurde, an dem Prozessor 101 (z.B. von Türöffnungssensor 107 über Fahrzeugschnittstelle 105) erhalten wurde.

Falls in Schritt 405 festgestellt wird, dass das Öffnen der Tür 11 durch den Türöffnungssensor 107 erfasst wurde (z.B. dass eine entsprechende Zustellungsereignisinformation, die anzeigt, dass das Öffnen der Tür 11 durch den Türöffnungssensor 107 erfasst wurde, an dem Prozessor 101 erhalten wurde), dann wird das Flussdiagramm mit Schritt 406 fortgesetzt. Andernfalls wird das Flussdiagramm mit Schritt 410 fortgesetzt.

In einem Schritt 406 wird die Zeitmessung neugestartet. Zum Beispiel ist der Prozessor 101 eingerichtet, das Messen der Zeit neu zu starten (d.h. die gemessene Zeit zurückzusetzen) und die Zeit zu messen (z.B. durch eine Timerfunktion und/oder eine Uhrfunktion).

In einem Schritt 407 wird geprüft, ob das Schließen der Tür 11 durch den Türöffnungssensor 107 erfasst wurde. Zum Beispiel ist der Prozessor 101 eingerichtet, zu prüfen, ob eine entsprechende Zustellungsereignisinformation, die anzeigt, dass das Schließen der Tür 11 durch den Türöffnungssensor 107 erfasst wurde, an dem Prozessor 101 (z.B. von Türöffnungssensor 107 über Fahrzeugschnittstelle 105) erhalten wurde.

Falls in Schritt 407 festgestellt wird, dass das Schließen der Tür 11 durch den Türöffnungssensor 107 erfasst wurde (z.B. dass eine entsprechende Zustellungsereignisinformation, die anzeigt, dass das Schließen der Tür 11 durch den Türöffnungssensor 107 erfasst wurde, an dem Prozessor 101 erhalten wurde), dann wird das Flussdiagramm mit einem Schritt 411 fortgesetzt und das Verriegeln der Tür 11 des Fahrzeugs 10 bewirkt. Andernfalls wird das Flussdiagramm mit Schritt 408 fortgesetzt.

In einem Schritt 408 wird geprüft, ob die gemessene Zeit (hier z.B. die Zeit seit dem Erfassen des Öffnens der Tür) eine vorgegebene Dauer überschreitet. Zum Beispiel ist der Prozessor 101 eingerichtet, zu prüfen, ob die gemessene Zeit eine vorgegebene Dauer überschreitet. Wie oben offenbart, ist die vorgegebene Dauer beispielsweise eine erwartete maximale Dauer bis zum nächsten Zustellungsereignis (z.B. bis zum Schließen der Tür).

Falls in Schritt 408 festgestellt wird, dass die gemessene Zeit eine vorgegebene Dauer überschreitet, wird das Flussdiagramm mit Schritt 409 fortgesetzt. Andernfalls wird Schritt 407 des Flussdiagramms wiederholt.

In einem Schritt 409 wird das Schließen der Tür 11 des Fahrzeugs 10 bewirkt. Zum Beispiel ist der Prozessor 101 eingerichtet, einen elektronisch ansteuerbaren und durch einen Motor angetriebenen Türöffner und -schließer der Tür 11 des Fahrzeugs 10 über Fahrzeugschnittstelle 105 derart anzusteuern, dass die Tür 11 des Fahrzeugs 10 geschlossen wird. Falls die Tür 11 des Fahrzeugs 10 keinen solchen Türöffner und -schließer umfasst, kann alternativ beispielsweise ein optischer und/oder akustischer Alarm ausgelöst und/oder eine entsprechende Information an die Fernüberwachungsvorrichtung 30 gesendet werden, um ein Schließen der Tür durch eine Person (z.B. den Zusteller, den Besitzer oder einen Passanten) zu veranlassen. Sobald die Tür 11 des Fahrzeugs 10 geschlossen ist, wird das Flussdiagramm mit dem Schritt 411 fortgesetzt und das Verriegeln der Tür 11 des Fahrzeugs 10 bewirkt.

Falls in dem oben offenbarten Schritt 405 nicht festgestellt wird, dass das Öffnen der Tür 11 durch den Türöffnungssensor 107 erfasst wurde, dann wird das Flussdiagramm mit Schritt 410 fortgesetzt.

In einem Schritt 410 wird geprüft, ob die gemessene Zeit (hier z.B. die Zeit seit dem Bewirken des Entriegelns der Tür) eine vorgegebene Dauer überschreitet. Zum Beispiel ist der Prozessor 101 eingerichtet, zu prüfen, ob die gemessene Zeit eine vorgegebene Dauer überschreitet. Wie oben offenbart, ist die vorgegebene Dauer beispielsweise eine erwartete maximale Dauer bis zum nächsten Zustellungsereignis (z.B. bis zum Öffnen der Tür).

Falls in Schritt 410 festgestellt wird, dass die gemessene Zeit eine vorgegebene Dauer überschreitet, wird das Flussdiagramm mit Schritt 411 fortgesetzt und das Verriegeln der Tür 11 des Fahrzeugs 10 bewirkt. Andernfalls wird Schritt 405 des Flussdiagramms wiederholt.

In einem Schritt 411 wird das Verriegeln der Tür 11 des Fahrzeugs 10 bewirkt. Der Schritt 411 entspricht dem oben beschriebenen Schritt 304. Demnach wird das Verriegeln der Tür des Fahrzeugs durch die Steuervorrichtung nur dann bewirkt, wenn die erhaltenen Zustellungsereignisinformationen mit einem oder mehreren vorgegebenen Zustellungsereignissen assoziiert sind. Gemäß der Erfindung ist zumindest eines der vorgegebenen Zustellungsereignisse das Ablegen der Sendung in den Innenraum des Fahrzeugs 10, wobei das Ablegen von einem Erfassungsmittel des Fahrzeugs 10 erfasst wird und wobei das Erfassungsmittel in dem Fahrzeug 10 auch für andere Zwecke als das Erfassen des Ablegens der Sendung in den Innenraum des Fahrzeugs 10 verwendet wird. Anschließend endet das Flussdiagramm 400.

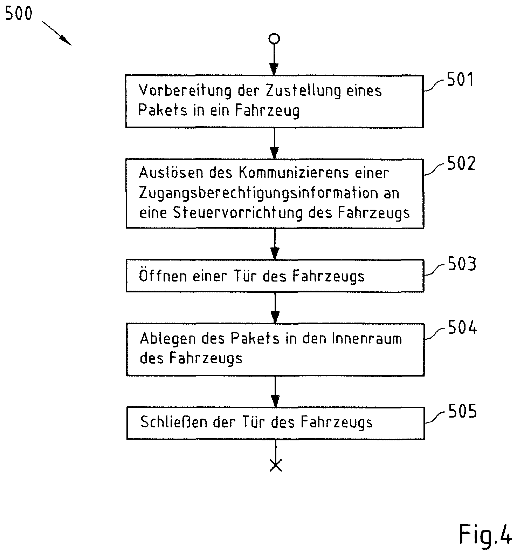

Fig. 4 ist ein Flussdiagramm 500, das die Schritte eines Beispiels für eine offenbarte Verwendung darstellt. Die im Flussdiagramm 500 dargestellten Schritte werden von einem Zusteller eines Zustelldienstes ausgeführt und im Folgenden aus dessen Perspektive beschrieben. In dem in Fig. 4 dargestellten Beispiel, möchte der Zusteller die Tür 11 des Fahrzeugs 10 öffnen, um ein Paket in den Innenraum (z.B. den Kofferraum) das Fahrzeugs 10 zu legen und somit in das Fahrzeug 10 zustellen zu können. Im diesem Beispiel wird davon ausgegangen, dass der Zusteller als Zustellervorrichtung einen Handscanner (z.B. Honeywell's LXE Tecton MX7) verwendet.

In einem Schritt 501 bereitet der Zusteller die Zustellung des Pakets in das Fahrzeug 10 vor.

Zum Beispiel scannt der Zusteller in Schritt 501 einen auf dem Paket aufgebrachten Barcode mit dem Handscanner. Dadurch kann der Handscanner das Paket beispielsweise identifizieren und die dem Paket zugeordneten Sendungsinformationen abrufen. Die Sendungsinformationen enthalten beispielsweise Informationen über eine mögliche Zustellung des Pakets in das Fahrzeug 10, dessen Besitzer der Empfänger des Pakets ist. Zum Beispiel werden dem Zusteller eine Zustellposition oder ein Zustellbereich und ein Zustellzeitraum angezeigt, so dass der Zusteller beispielsweise weiß, wann und wo die Zustellung des Pakets in das Fahrzeug 10 stattfinden kann. Wie oben offenbart, werden die Zustellposition oder der Zustellbereich und der Zustellungszeitraum beispielsweise durch den Empfänger des Pakets und/oder den Besitzer des Fahrzeugs 10 vorgegeben.

In einem Schritt 502 löst der Zusteller das Kommunizieren einer Zugangsberechtigungsinformation an die Steuervorrichtung 100 des Fahrzeugs 10 aus.

Zum Beispiel gibt der Benutzer einen entsprechenden Befehl auf Eingabemitteln des Handscanners ein, so dass der Handscanner (z.B. die Zustellervorrichtung 20 in Fig. 2a) die Zugangsberechtigungsinformation an die Steuervorrichtung 100 kommuniziert (z.B. über Kommunikationsverbindung 201 an die Kommunikationsschnittstelle 104 und/oder 108 sendet). Alternativ kann der Handscanner beispielsweise auf die Benutzereingabe des Zustellers auch eine Zugangsberechtigungsinformation-Anfrage an eine Fernüberwachungsvorrichtung (z.B. Fernüberwachungsvorrichtung 30 in Fig. 2b) kommunizieren (z.B. über Kommunikationsverbindung 202 an die Fernüberwachungsvorrichtung 30 senden), um zu bewirken, dass die Fernüberwachungsvorrichtung die Zugangsberechtigungsinformation an die Steuervorrichtung 100 kommuniziert (z.B. über Kommunikationsverbindung 203 an die Kommunikationsschnittstelle 104 und/oder 108 sendet).

Wie beispielsweise oben zu den Schritten 301 und 302 des Flussdiagramms 300offenbart, erhält die Steuervorrichtung 100 die Zugangsberechtigungsinformation und bewirkt das Entriegeln der Tür 11 des Fahrzeugs 10.

In einem Schritt 503 öffnet der Zusteller die Tür 11 des Fahrzeugs 10.

In einem Schritt 504 legt der Zusteller das Paket in den Innenraum des Fahrzeugs 10.

In einem Schritt 505 schließt der Zusteller die Tür 11 des Fahrzeugs 10..

Wie oben beschrieben, wird das Verriegeln der Tür 11 des Fahrzeugs 10 anschließend durch die Steuervorrichtung 100 bewirkt, falls das Ablegen der Sendung erfasst wurde.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Bewirken des Entriegelns und Verriegelns zumindest einer Tür (11) eines Fahrzeugs (10) für eine Zustellung einer Sendung, insbesondere eines Pakets und/oder eines Briefs, in das Fahrzeug, das Verfahren umfassend:
- Erhalten (301, 401) einer Zugangsberechtigungsinformation an einer Steuervorrichtung (100),
- Bewirken (302, 403) des Entriegelns der Tür (11) des Fahrzeugs (10) zumindest teilweise in Abhängigkeit der erhaltenen Zugangsberechtigungsinformation durch die Steuervorrichtung,
- Erhalten (303, 405, 407, 408, 410) einer oder mehrerer mit einem Zustellungsereignis assoziierten Zustellungsereignisinformationen an der Steuervorrichtung (100),
- Bewirken (304, 411) des Verriegelns der Tür (11) des Fahrzeugs (10) durch die Steuervorrichtung nur dann, wenn die erhaltenen Zustellungsereignisinformationen mit einem oder mehreren vorgegebenen Zustellungsereignissen assoziiert sind, wobei zumindest eines der vorgegebenen Zustellungsereignisse das Ablegen (504) der Sendung in einen Innenraum des Fahrzeugs (10) ist, wobei das Ablegen (504) von einem Erfassungsmittel des Fahrzeugs (10) erfasst wird, und das Erfassungsmittel in dem Fahrzeug (10) auch für andere Zwecke als das Erfassen des Ablegens (504) der Sendung in den Innenraum des Fahrzeugs (10) verwendet wird,
wobei das Verfahren **gekennzeichnet ist dadurch**, dass
das Erfassungsmittel die mit dem Ablegen (504) assoziierte Zustellungsereignisinformation erzeugt und an Kommunikationsmittel (105) der Steuervorrichtung (100) kommuniziert und die Steuervorrichtung (100) prüft, ob die eine oder die mehreren erhaltenen Zustellungsereignisinformationen mit dem einem oder den mehreren vorgegebenen Zustellungsereignissen assoziiert sind.

2. Verfahren gemäß Anspruch 1, wobei die Zugangsberechtigungsinformation eine räumliche Gültigkeitsinformation als einen Zugangsberechtigungsparameter enthält.

3. Verfahren gemäß einem der Ansprüche 1 bis 2, wobei zumindest ein weiteres der mehreren vorgegebenen Zustellungsereignisse das Öffnen (503) und/oder Schließen (505) der Tür, das Überschreiten (408, 410) einer vorgegebenen Dauer des Zustellungsvorgangs seit dem Bewirken des Entriegelns der Tür (11) des Fahrzeugs (10) und/oder seit dem Erhalten einer Zustellungsereignisinformation, und/oder eine Benutzereingabe zum Abschluss des Zustellungsvorgangs durch den Zusteller an einer tragbaren Zustellervorrichtung (20) ist.

4. Verfahren gemäß einem der Ansprüche 1 bis 3, wobei die Zugangsberechtigungsinformation und/oder die Zustellungsereignisinformationen über eine oder mehrere drahtlose Kommunikationsverbindungen (201, 203) an der Steuervorrichtung (100) empfangen werden.

5. Verfahren gemäß Anspruch 4, wobei zumindest eine der drahtlosen Kommunikationsverbindungen (203) eine Kommunikationsverbindung über ein Mobilfunknetz ist, und/oder wobei zumindest eine der drahtlosen Kommunikationsverbindungen (201) eine Kommunikationsverbindung über ein lokales Funknetz ist.

6. Verfahren gemäß einem der Ansprüche 1 bis 5, wobei die Tür (11) eine Kofferraumtür des Fahrzeugs (10) ist, und/oder wobei ausschließlich die Kofferraumtür des Fahrzeugs (10) entriegelt wird.

7. Verfahren gemäß einem der Ansprüche 1 bis 6, das Verfahren ferner umfassend:
- Öffnen der Tür und/oder Bewirken des Öffnens der Tür, und/oder
- Schließen der Tür und/oder Bewirken des Schließens der Tür.

8. Fahrzeug (10), umfassend:
- zumindest eine Tür (11),
- Verriegelungsmittel, die eingerichtet sind, die Tür zu verriegeln und zu entriegeln,
- ein Erfassungsmittel, und
- eine Steuervorrichtung (100) umfassend Mittel (101-105),
wobei die Mittel (101-105) der Steuervorrichtung (100) und das Erfassungsmittel zur Ausführung des Verfahrens nach einem der Ansprüche 1 bis 7 eingerichtet sind.

9. System (2a, 2b), umfassend:
- ein Fahrzeug (10) gemäß Anspruch 8, und
- eine tragbare Zustellervorrichtung (20).

## Claims

1. A method for causing of unlocking and locking of at least one door (11) of a vehicle (10) for delivery of a shipment, particularly a package and/or a letter, into the vehicle, the method comprising:
- obtaining (301, 401) a piece of access authorisation information at a control apparatus (100),
- causing (302, 403) of the unlocking of the door (11) of the vehicle (10), at least in part on the basis of the obtained piece of access authorisation information, by the control apparatus,
- obtaining (303, 405. 407, 408, 410) one or more pieces of delivery event information, associated with a delivery event, at the control apparatus (100),
- causing (304, 411) of the locking of the door (11) of the vehicle (10) by the control apparatus only if the obtained pieces of delivery event information are associated with one or more predetermined delivery events, wherein at least one of the one or more predetermined delivery events is depositing (504) of the shipment in an interior of the vehicle (10), wherein the depositing (504) of the shipment is sensed by a sensing means of the vehicle (10), and the sensing means of the vehicle (10) is also used for other purposes than sensing depositing (504) of the shipment in the interior of the vehicle (10), wherein the method is **characterized in that** the sensing means generates the piece of delivery event information, associated with the depositing (504) of the shipment and communicates it to communication means (105) of the control apparatus (100) and the control apparatus (100) checks, whether the one or more obtained pieces of delivery event information are associated with the one or more predetermined delivery events.

2. The method according to claim 1, wherein the piece of access authorisation information includes a piece of spatial validity information as an access authorisation parameter

3. The method according to any of claims 1 to 2, wherein at least one further predetermined delivery event of the one or more predetermined delivery events is opening (503) and/or closing (505) of the door, exceeding (408, 410) of a predetermined duration of a delivery process since the causing of the unlocking of the door (11) of the vehicle (10) and/or since the obtaining of a piece of delivery event information, and/or a user input for completion of the delivery process by the delivery agent on a portable delivery agent apparatus (20).

4. The method according to any of claims 1 to 3, wherein the piece of access authorisation information and/or the pieces of delivery event information are received at the control apparatus (100) via one or more wireless communication connections (201, 203).

5. The method according to claim 4, wherein at least one of the wireless communication connections (203) is a communication connection via a mobile radio network, and/or wherein at least one of the wireless communication connections (201) is a communication connection via a local radio network.

6. The method according to any of claims 1 to 5, wherein the door (11) is a boot door of the vehicle (10), and/or wherein exclusively the boot door of the vehicle (10) is unlocked.

7. The method according to any of claims 1 to 6, the method additionally comprising:
- opening of the door and/or causing of the opening of the door, and/or
- closing of the door and/or causing of the closing of the door.

8. A vehicle (10), comprising:
- at least one door (11),
- locking means configured to lock and unlock the door,
- sensing means, and
- a control apparatus (100), comprising means (101-105), wherein the means (101-105) of the control apparatus and the sensing means are configured to perform the method according to any of claims 1 to 7.

9. A system (2a, 2b), comprising:
- a vehicle (10) according to claim 8, and
- a portable delivery agent apparatus (20).

## Revendications

1. Procédé pour provoquer le déverrouillage et le verrouillage d'au moins une porte (11) d'un véhicule (10) pour une distribution d'un envoi postal, en particulier d'un paquet et/ou d'une lettre, dans le véhicule, le procédé comprenant :
- la réception (301, 401) d'une information d'autorisation d'accès sur un dispositif de commande (100),
- le déclenchement (302, 403) par le dispositif de commande du déverrouillage de la porte (11) du véhicule (10) au moins en partie en fonction de l'information d'autorisation d'accès reçue,
- la réception (303, 405, 407, 408, 410) d'une ou de plusieurs informations d'événement de distribution associées à un événement de distribution sur le dispositif de commande (100),
- de déclenchement (304, 411) par le dispositif de commande du verrouillage de la porte (11) du véhicule (10) seulement lorsque les informations d'événement de distribution reçues sont associées à un ou à plusieurs événements de distribution spécifiés, dans lequel au moins un des événements de distribution spécifiés est le dépôt (504) de l'envoi postal dans un habitacle du véhicule (10), dans lequel le dépôt (504) est détecté par un moyen de détection du véhicule (10), et le moyen de détection dans le véhicule (10) est utilisé également à des fins autres que la détection du dépôt (504) de l'envoi postal dans l'habitacle du véhicule (10),
dans lequel le procédé est **caractérisé en ce que**
le moyen de détection génère l'information d'événement de distribution associée au dépôt (504) et la communique à des moyens de communication (105) du dispositif de commande (100) et le dispositif de commande (100) vérifie si l'information ou les plusieurs informations d'événement de distribution reçues sont associées au ou aux plusieurs événements de distribution spécifiés.

2. Procédé selon la revendication 1, dans lequel l'information d'autorisation d'accès contient une information de validité spatiale en tant qu'un paramètre d'autorisation d'accès.

3. Procédé selon l'une quelconque des revendications 1 à 2, dans lequel au moins un autre desdits plusieurs événements de distribution spécifiés est l'ouverture (503) et/ou la fermeture (505) de la porte, le dépassement (408, 410) d'une durée spécifiée de l'opération de distribution depuis le déclenchement du déverrouillage de la porte (11) du véhicule (10) et/ou depuis la réception d'une information d'événement de distribution, et/ou une saisie d'utilisateur pour finaliser l'opération de distribution par le distributeur sur un dispositif distributeur (20) portatif.

4. Procédé selon l'une quelconque des revendications 1 à 3, dans lequel l'information d'autorisation d'accès et/ou les informations d'événement de distribution sont reçues par l'intermédiaire d'une ou de plusieurs liaisons de communication (201, 203) sans fil sur le dispositif de commande (100).

5. Procédé selon la revendication 4, dans lequel au moins une des liaisons de communication (203) sans fil est une liaison de communication par l'intermédiaire d'un réseau radio mobile et/ou dans lequel au moins une des liaisons de communication (201) sans fil est une liaison de communication par l'intermédiaire d'un réseau radio local.

6. Procédé selon l'une quelconque des revendications 1 à 5, dans lequel la porte (11) est une porte de coffre du véhicule (10) et/ou dans lequel exclusivement là porte de coffre du véhicule (10) est déverrouillée.

7. Procédé selon l'une quelconque des revendications 1 à 6, le procédé comprenant en outre :
- l'ouverture de la porte et/ou le déclenchement de l'ouverture de la porte, et/ou
- la fermeture de la porte et/ou le déclenchement de la fermeture de la porte.

8. Véhicule (10) comprenant :
- au moins une porte (11),
- des moyens de verrouillage qui sont mis au point pour verrouiller et déverrouiller la porte,
- un moyen de détection, et
- un dispositif de commande (100) comprenant des moyens (101 - 105), dans lequel les moyens (101 - 105) du dispositif de commande (100) et le moyen de détection sont mis au point pour exécuter le procédé selon l'une quelconque des revendications 1 à 7.

9. Système (2a, 2b) comprenant :
- un véhicule (10) selon la revendication 8, et
- un dispositif distributeur (20) portatif.
